# FASCICULE DE BREVET EUROPEEN

(11) **EP 2 649 777 B1**
(45) Date de publication et mention de la délivrance du brevet: **24.04.2019**
(21) Numéro de dépôt: 11793775.5
(22) Date de dépôt: 07.12.2011
(51) Int. Cl.: H04M 1/725, G07F 7/10, G06Q 20/00, G06Q 20/34, G06K 7/08, G07F 7/08, H04M 1/02

(54) **DISPOSITIF DE PAIEMENT ÉLECTRONIQUE**
ELEKTRONISCHE BEZAHLUNGSVORRICHTUNG
ELECTRONIC PAYMENT DEVICE

(30) Priorité: 07.12.2010 FR 1060205; 07.12.2010 FR 1060204
(43) Date de publication de la demande: 16.10.2013
(73) Titulaire: Ingenico Group, 75015 Paris (FR)
(72) Inventeur: GEORGES, Didier, F-26120 Chabeuil (FR); BARNERON, Sylvain, F-26000 Valence (FR)
(74) Mandataire: Vidon Brevets & Stratégie
(86) Numéro de dépôt international: PCT/EP2011/072001
(87) Numéro de publication internationale: WO 2012/076568

(56) Documents cités:
- WO-A1-2010/024923
- US-A1- 2005 236 480
- US-A1- 2006 049 255
- US-A1- 2009 173 790

## Description

### 1. Domaine de l'invention

La présente invention se rapporte au domaine des terminaux de paiement électroniques. Plus particulièrement, la présente invention se rapporte à un nouveau type de dispositif de paiement électronique qui peut être appairé. L'invention se rapporte encore plus particulièrement à la protection d'une tête de lecture magnétique d'un tel dispositif de paiement électronique.

### 2. Art antérieur

A l'heure actuelle, les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser des informations, telles que les montants des transactions, et un clavier de saisie de ces mêmes montants ainsi que des codes confidentiels saisis par les clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'une autorisation de débit.

Pour pouvoir communiquer avec l'extérieur, et notamment avec des serveurs bancaires, le terminal de paiement utilise donc un moyen de connexion. L'un de ces moyens consiste à utiliser un réseau de communication sans fil, par exemple GPRS (de l'anglais « General Packet Radio Service »). Le terminal de paiement est alors muni d'une carte SIM (de l'anglais « Subscriber Identity Module »). Il s'agit d'une puce contenant un microcontrôleur et de la mémoire. Cette carte SIM est généralement associée à un abonnement téléphonique (de type transmission de données) qui doit être souscrit par le commerçant. Outre le fait que ce type d'abonnement est relativement onéreux, la mise en oeuvre des fonctionnalités de communication est attribuée au terminal. Ainsi, en plus des fonctions de paiement, le terminal doit gérer des fonctions de communication, qui ne sont pas naturellement les fonctions que l'on attend d'un terminal de paiement.

Pour pallier le problème de coût de l'abonnement associé à la communication GPRS notamment, de nouveaux types de terminaux communiquent par l'intermédiaire d'un réseau de type « WiFi » (de l'anglais pour « Wireless Fidelity ») par exemple. Le commerçant n'est alors plus obligé de souscrire un abonnement particulier. Le terminal de paiement peut se connecter au réseau WiFi du commerçant et accéder, comme dans une connexion filaire, aux serveurs bancaires. Cependant, l'usage du terminal est alors limité à la zone de couverture du réseau WiFi, ce qui ne convient pas à une utilisation nomade (par exemple pour un médecin en visite chez ses patients ou pour un chauffeur de taxi).

Ainsi, il existe un besoin pour proposer un terminal de paiement qui puisse être utilisé pour des applications nomades, donc en utilisant un réseau de communication sans fil de type GPRS/UMTS, tout en minimisant les coûts de mise en oeuvre d'un tel terminal de paiement. Dans ce contexte il est fait référence aux documents d'art antérieur US 2005/236480 A1, US 2006/049255 A1, WO 2010/024923 A1 et US 2009/173790 A1.

### 3. Exposé de l'invention

L'invention ne présente pas ces inconvénients de l'art antérieur. L'invention se rapporte plus particulièrement à un dispositif de paiement selon la revendication 1 et destiné à être appairé avec un dispositif de communication pour former un terminal électronique de paiement.

Selon l'invention, ledit dispositif de paiement comprend un boîtier formé d'une demi-coque supérieure et d'une demi-coque inférieure comprenant une surface de fixation d'une interface modulaire pour l'appairage du dispositif de communication et une fente s'étendant longitudinalement, ladite fente présentant une ouverture permettant le passage d'une tête de lecture magnétique, ledit dispositif de paiement comprenant en outre sous la surface de fixation une carte de circuit électronique disposée latéralement à ladite tête de lecture magnétique et dans le même plan que la surface de lecture de ladite tête magnétique, de sorte que ladite carte de circuit électronique permette de combler l'intégralité d'un volume inutilisé apparaissant au niveau de ladite fente.

Ainsi, l'invention permet d'éviter une introduction d'un dispositif frauduleux au sein dudit dispositif de paiement. Un tel dispositif frauduleux peut par exemple prendre la forme d'une tête de lecture complémentaire.

En d'autres termes, l'invention porte sur un dispositif de paiement destiné à être appairé avec un dispositif de communication pour former un terminal électronique de paiement comprenant des moyens de lecture d'une puce d'une carte à puce et des moyens de lecture d'une piste magnétique d'une carte magnétique, comprenant une tête de lecture magnétique.

Selon l'invention, un tel dispositif de paiement présente une fente longitudinale permettant l'insertion d'une carte magnétique et comprend une carte-mère, portant au moins un premier circuit intégré apte à communiquer avec une carte à puce, et au moins une carte-fille de protection, portant au moins un élément de sécurité, ladite carte-fille de protection s'étendant parallèlement à ladite carte-mère, le long d'une portion de ladite fente, de façon à empêcher un accès frauduleux à ladite carte-mère par l'intermédiaire de ladite fente.

Selon un mode de réalisation particulier, ladite carte de circuit électronique comprend en outre au moins un circuit intégré de contrôle de ladite carte de circuit électronique.

Ainsi, cette carte complémentaire peut être utilisée pour apporter des fonctionnalités supplémentaires au dispositif de paiement.

Selon une caractéristique particulière, ledit au moins un circuit intégré de contrôle comprend des moyens de communications appartenant au groupe comprenant :
- des moyens de communications de type « bluetooth » ;
- des moyens de communications de type « WiFi » ;
- des moyens de communications sans contact.

Ainsi, la carte complémentaire peut être utilisée pour apporter des fonctionnalités supplémentaires de communication au dispositif de paiement.

Selon une caractéristique particulière, que ledit au moins un circuit intégré de contrôle comprend au moins un identifiant de ladite carte de circuit électronique.

Ainsi, il est possible d'identifier la carte de circuit électronique pour éviter une utilisation frauduleuse de cette carte de circuit électronique.

Selon une caractéristique particulière, ledit au moins un identifiant de ladite carte de circuit électronique est une adresse MAC d'un moyen de communication d'un circuit intégré de contrôle de ladite carte de circuit électronique.

Ainsi, il n'est pas nécessaire de prévoir des moyens supplémentaires, qui sont nécessairement plus coûteux à mettre en oeuvre, pour définir un identifiant du circuit intégré de contrôle.

Selon un mode de réalisation particulier, ladite carte de circuit électronique comprend en outre un dispositif anti-intrusion comprenant au moins un circuit conducteur tridimensionnel, connecté à une entrée d'un processeur de sécurité dudit dispositif de paiement.

Ainsi, l'invention permet d'éviter qu'une personne mal intentionnée réalise un perçage du dispositif de paiement.

Selon l'invention, ledit terminal électronique de paiement est formé par l'appairage d'un dispositif de paiement et d'un dispositif de communication étant un terminal téléphonique standard, ledit dispositif de paiement comprend un boîtier formé d'une demi-coque supérieure et d'une demi coque inférieure comprenant une surface de fixation d'une interface modulaire pour l'appairage du dispositif de communication et une fente s'étendant longitudinalement, ladite fente présentant une ouverture permettant le passage d'une tête de lecture magnétique, ledit dispositif de paiement comprenant en outre sous la surface de fixation une carte de circuit électronique disposée latéralement à ladite tête de lecture magnétique et dans le même plan que la surface de lecture de ladite tête magnétique, de sorte que ladite carte de circuit électronique permette de combler l'intégralité d'un volume inutilisé apparaissant au niveau de ladite fente.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A à 1D illustrent un exemple de terminal de paiement selon un mode de réalisation de l'invention ;
- la figure 2 présente la structure interne du dispositif de paiement ;
- la figure 3 présente la structure interne du dispositif de paiement avec l'adjonction de la carte fille.

### 5. Description d'un mode de réalisation de l'invention

Le principe général de l'invention repose sur l'appairage physique d'un dispositif de paiement à un dispositif de communication, tel qu'un « smartphone », pour former un terminal de paiement.

Ainsi, l'invention permet de pallier les inconvénients de l'art antérieur et notamment permet de ne pas avoir recours à une ligne téléphonique filaire pour réaliser une connexion au réseau de communication et aux serveurs tels que des serveurs d'autorisation ou des serveurs bancaires.

Plus particulièrement, dans un mode de réalisation de l'invention, le dispositif de paiement peut être physiquement appairé avec le dispositif de communication par l'intermédiaire d'une structure d'appairage particulière, appelée interface modulaire. Lorsqu'elle est utilisée, cette interface modulaire est par exemple fixée sur une face arrière du dispositif de paiement. Cette structure est démontable, selon un mode de réalisation particulier de l'invention, en mettant en oeuvre une cinématique particulière.

Cette interface modulaire, selon l'invention, permet d'insérer et de maintenir le dispositif de communication dans un logement prévu à cet effet. Parmi les éléments de cette interface modulaire, selon l'invention, on distingue notamment un dispositif d'appairage, encore appelé carte électronique de connexion, permettant de réaliser une connexion physique entre le dispositif de paiement et le dispositif de communication.

Cette interface modulaire comprend d'autres éléments, qui, selon certains modes de réalisation de l'invention, permettent d'assurer une sécurité d'usage du terminal de paiement formé du dispositif de paiement et du dispositif de communication.

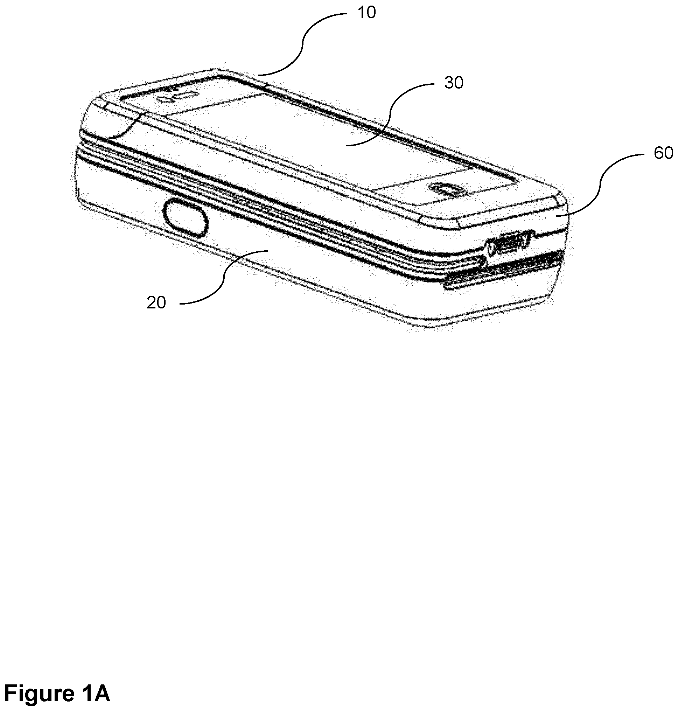

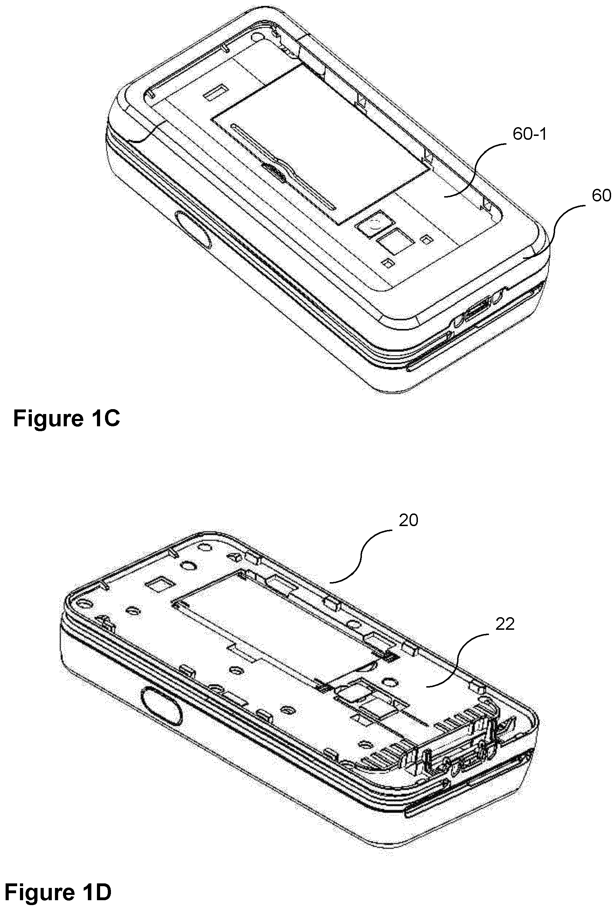

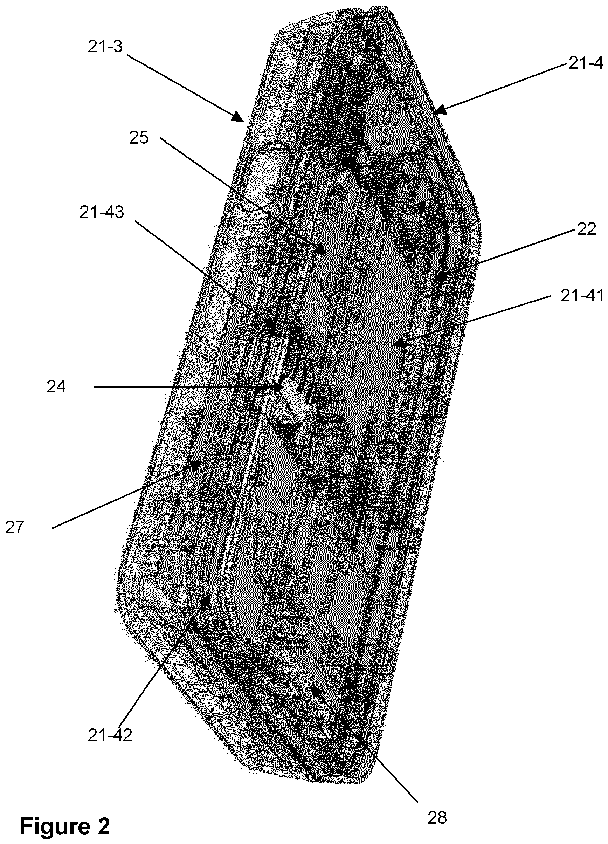

Plus particulièrement, le terminal de paiement objet d'un mode de réalisation de l'invention est décrit en relation avec les figures 1A à 1D, 2 et 3.

Le terminal de paiement (10) comprend deux sous-ensembles généraux, pouvant être assemblés, que sont le dispositif de paiement (20) et le dispositif de communication (30).

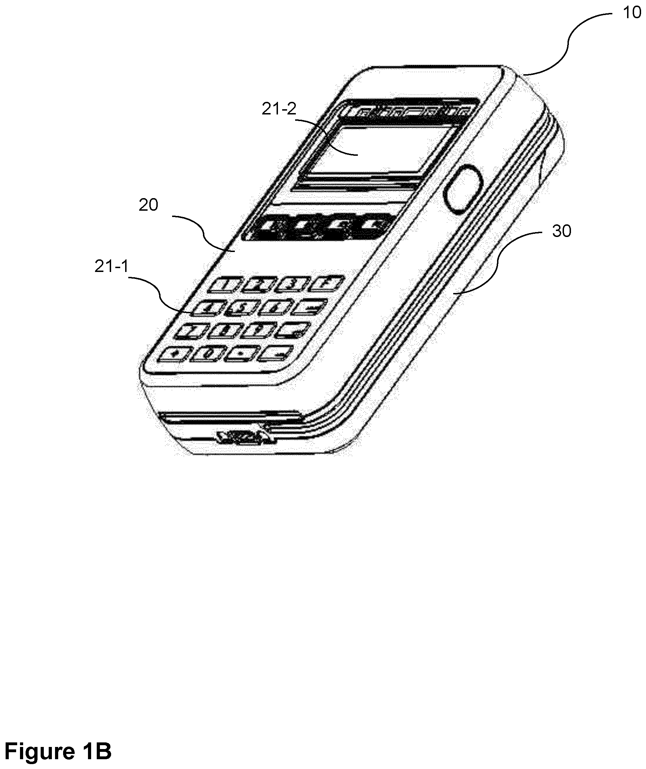

Comme illustré, et dans un mode de réalisation illustratif et non limitatif de l'invention, le dispositif de paiement (20) comprend une face avant, visible sur la figure 1B, présentant un clavier pour la saisie d'information (21-1) et un écran de visualisation (21-2) des informations saisies. Le dispositif de paiement comprend, en face arrière, visible sur la figure 1D, une surface de fixation (22) permettant la fixation d'une interface modulaire (60) pour l'appairage du dispositif de communication (30).

Plus particulièrement, cette interface modulaire définit un logement (60-1) d'insertion et d'appairage du dispositif de communication (30).

Le dispositif de paiement, quant à lui, est conformé pour remplir des fonctions de paiement. Pour ce faire, le dispositif de paiement (20) comprend, outre le clavier pour la saisie d'information (21-1) et l'écran de visualisation (21-2) des informations saisies, une demi coque supérieure (21-3) comprenant les orifices nécessaires pour le passage des touches du clavier (21-1) et une ouverture pour la visualisation de l'écran (21-2). L'écran peut également être sensitif, et assurer la fonction de clavier.

Le dispositif de paiement (20) comprend également une demi coque inférieure (21-4) qui se solidarise à la demi coque supérieure (21-3) pour former le boîtier du dispositif de paiement (20). La demi coque inférieure (21-4) définit la surface (22) permettant la fixation de l'interface modulaire (60). La demi coque inférieure (21-4) comprend un logement (21-41) pour l'insertion d'une batterie permettant l'alimentation électrique du dispositif de paiement (20).

La demi coque inférieure (21-4) est également conformée de sorte qu'elle présente une fente (21-42) permettant le passage d'une carte de paiement comprenant une piste magnétique. Une fois le dispositif de paiement assemblé, cette fente (21-42) s'étend sur l'un des flancs du dispositif de paiement (20) et permet la lecture de la carte de paiement à bande magnétique, par un mouvement de translation de celle-ci sur la longueur du dispositif de paiement (20).

La demi coque inférieure (21-4) du dispositif de paiement (20) comprend une ouverture (21-43) traversée par une tête de lecture magnétique (24). Cette ouverture (21-43) est conformée de sorte qu'elle puisse permettre une certaine mobilité de la tête de lecture magnétique (24). Ainsi, un jeu réduit est possible, assurant cette mobilité est aménagé sur le pourtour de l'ouverture. La tête magnétique (24) peut ainsi évoluer dans une certaine mesure afin d'assurer une lecture optimale des informations contenues sur la piste magnétique d'une carte de paiement. Cette tête de lecture magnétique (24) est posée sur un support et est reliée à une carte mère (27) du dispositif de paiement par l'intermédiaire d'une nappe.

La carte mère (27) est un circuit électronique qui comprend sur une première face, dans ce mode de réalisation, un ensemble de microcircuits, notamment un ou plusieurs microprocesseurs et/ou des mémoires, ainsi que des dispositifs permettant la connexion des éléments du clavier (21-1) et de l'écran de visualisation (21-2). Sur sa deuxième face, la carte mère comprend d'autres microcircuits, ainsi qu'un lecteur de carte à mémoire (appelé lecteur CAM) (28). Ce lecteur (28) est configuré pour permettre l'insertion et la lecture d'une carte de paiement comprenant une puce.

Un volume inutilisé (25) est présent sous la surface de fixation (22) de la demi coque inférieure (21-4), latéralement à la tête de lecture magnétique (24).

Afin d'augmenter la sécurité du dispositifs de paiement, les inventeurs ont eu l'idée de proposer l'adjonction d'une carte, également appelée carte « fille », qui permet d'une part de sécuriser l'accès aux composants internes du dispositif de paiement et d'autre part de remplir d'autres fonctions annexes du dispositif de paiement, lesquelles sont détaillées par la suite. Cette carte fille est située sous la surface de fixation (22) permettant la fixation d'une interface modulaire (60) pour l'appairage du dispositif de communication (30). En d'autres termes, cette carte fille qui empêche l'accès à la carte mère et empêche l'insertion d'une tête magnétique.

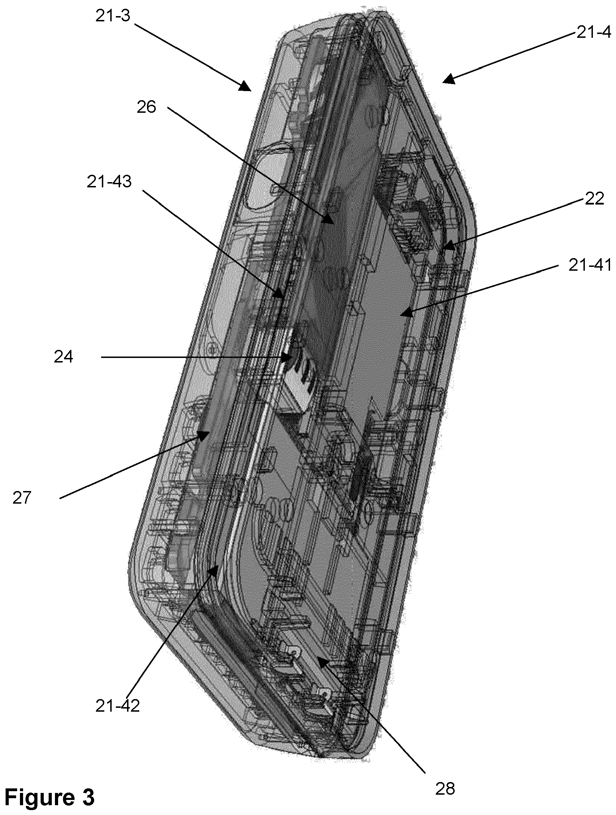

Selon l'invention, une carte (PCB) de sécurité, dite carte « fille » (26, figure 3) est prévue, à proximité de la fente et au voisinage de la tête magnétique, au-dessus d'une portion de la carte mère. Cette carte fille occupe ainsi le volume libre apparaissant au niveau de la fente, ce qui permet d'empêcher un accès électronique, par cette fente, à la carte mère et/ou une introduction frauduleuse d'une deuxième tête de lecture magnétique. Cette carte fille (26) est donc conformée pour occuper le volume disponible (25) dans le dispositif de paiement (20) et d'autre part pour protéger l'accès à la carte mère (27).

On optimise ainsi la sécurité du dispositif de paiement, de façon simple et efficace, en tenant compte des contraintes imposées par la forme de celui-ci, qui doit être adaptée au dispositif de communication avec lequel il doit coopérer.

Selon une caractéristique complémentaire, la carte fille comprend en outre un ou plusieurs des moyens de communication entre le dispositif de communication de paiement et l'extérieur. Parmi ces moyens de communication envisagée, on peut citer :
- une interface de communication BT (Bluetooth) ;
- une interface de communication Wifi ;
- une interface de communication sans contact (Contactless) de type RFID.

Selon une caractéristique complémentaire, la carte fille comprend en outre un dispositif d'identification du dispositif de paiement auquel cette carte fille est supposée être connectée. Ainsi, l'invention permet de s'assurer qu'il ne sera pas possible de désassembler le dispositif de paiement afin de reconstruire un autre dispositif de paiement à partir de pièces détachées appartenant à divers autres dispositifs de paiement. En effet, un individu qui ne dispose pas des autorisations nécessaires au montage et au démontage des dispositifs de paiement dans l'assemblée un nouveau dispositif à l'aide de pièces détachées récupérées sur d'autres dispositif de paiement le dispositif d'identification qui est présent sur la carte fille permettra de détecter la tentative. Le dispositif de paiement passera donc alors en mode attaque.

Comme cela a déjà été mentionné, dans ce mode de fonctionnement, le terminal prend les dispositions nécessaires permettant de protéger le contenu des données, notamment des données bancaires, qui sont contenues dans les mémoires du terminal.

Selon un mode de réalisation particulier, cet identifiant comprend une adresse MAC, correspondant par exemple à l'adresse MAC d'une des interfaces de communication intégrées à la carte fille. Cette adresse MAC, qui permet d'identifier de manière unique le circuit de communication utilisé, est fournie au dispositif de paiement afin que celui-ci puisse identifier la carte fille qui lui est associée.

Selon une autre caractéristique complémentaire, la carte fille est également munie d'un dispositif anti-intrusion lui-même connecté à une entrée du processeur de sécurité du dispositif de paiement. Le dispositif anti-intrusion comprend au moins un circuit conducteur tridimensionnel, par exemple sous la forme d'un treillis, et au moins un élément de contact de ce circuit conducteur avec une plage de connexion du dispositif anti-intrusion sur le circuit imprimé de la carte mère du dispositif de paiement.

## Revendications

1. Dispositif de paiement (20) destiné à être appairé avec un dispositif de communication (30) pour former un terminal électronique de paiement (10),
ledit dispositif de paiement (20) comprend un boîtier formé d'une demi-coque supérieure (21-3) et d'une demi-coque inférieure (21-4) comprenant une surface de fixation (22) d'une interface modulaire (60) pour l'appairage du dispositif de communication (30) et une fente (21-42) s'étendant longitudinalement, ladite fente présentant une ouverture (23-1) permettant le passage d'une tête de lecture magnétique (24),
ledit dispositif de paiement (20) étant en outre **caractérisé en ce qu'**il comprend, sous la surface de fixation (22), une carte de circuit électronique (26) disposée latéralement à ladite tête de lecture magnétique (24) et dans le même plan que la surface de lecture de ladite tête magnétique, de sorte que ladite carte de circuit électronique (26) permette de combler l'intégralité d'un volume inutilisé (25) apparaissant au niveau de ladite fente (21-42).

2. Dispositif de paiement (20) selon la revendication 1, **caractérisé en ce que** ladite carte de circuit électronique (26) comprend en outre au moins un circuit intégré de contrôle et/ou de communication.

3. Dispositif de paiement (20) selon la revendication 2, **caractérisé en ce que** ledit au moins un circuit intégré de communication comprend des moyens de communication appartenant au groupe comprenant :
- des moyens de communication de type Bluetooth ;
- des moyens de communication de type WiFi ;
- des moyens de communication sans contact.

4. Dispositif de paiement (20) selon la revendication 2, **caractérisé en ce que** ledit au moins un circuit intégré de contrôle porte au moins un identifiant de ladite carte de circuit électronique (26).

5. Dispositif de paiement (20) selon la revendication 4, **caractérisé en ce que** ledit au moins un identifiant de ladite carte de circuit électronique (26) est une adresse MAC d'un moyen de communication d'un circuit intégré de communication de ladite carte de circuit électronique (26).

6. Dispositif de paiement (20) selon la revendication 1, **caractérisé en ce que** ladite carte de circuit électronique (26) comprend en outre un dispositif anti-intrusion comprenant au moins un circuit conducteur tridimensionnel, connecté à une entrée d'un processeur de sécurité dudit dispositif de paiement.

7. Terminal électronique de paiement (10) formé par l'appairage d'un dispositif de paiement (20) et d'un dispositif de communication étant un terminal téléphonique standard,
ledit dispositif de paiement (20) comprend un boîtier formé d'une demi-coque supérieure (21-3) et d'une demi coque inférieure (21-4) comprenant une surface de fixation (22) d'une interface modulaire (60) pour l'appairage du dispositif de communication (30) et une fente (21-42) s'étendant longitudinalement, ladite fente présentant une ouverture (23-1) permettant le passage d'une tête de lecture magnétique (24),
ledit dispositif de paiement (20) étant en outre **caractérisé en ce qu'**il comprend, sous la surface de fixation (22), une carte de circuit électronique (26) disposée latéralement à ladite tête de lecture magnétique (24) et dans le même plan que la surface de lecture de ladite tête magnétique, de sorte que ladite carte de circuit électronique (26) permette de combler l'intégralité d'un volume inutilisé (25) apparaissant au niveau de ladite fente (21-42).

## Patentansprüche

1. Zahlungsvorrichtung (20), die dazu bestimmt ist, gemeinsam mit einer Kommunikationsvorrichtung (30) verwendet zu werden, um ein elektronisches Zahlungsendgerät (10) zu bilden, wobei die Zahlungsvorrichtung (20) ein Gehäuse umfasst, das von einer oberen Halbschale (21-3) und einer unteren Halbschale (21-4) gebildet ist, umfassend eine Fläche zur Befestigung (22) einer modularen Schnittstelle (60) zum Zuschalten der Kommunikationsvorrichtung (30) und einen Spalt (21-42), der sich längs erstreckt, wobei der Spalt eine Öffnung (23-1) aufweist, die den Durchgang eines Magnetlesekopfes (24) ermöglicht,
wobei die Zahlungsvorrichtung (20) ferner **dadurch gekennzeichnet ist, dass** sie unter der Befestigungsfläche (22) eine elektronische Schaltungskarte (26) umfasst, die seitlich zum Magnetlesekopf (24) und in derselben Ebene wie die Lesefläche des Magnetkopfes angeordnet ist, so dass es die elektronische Schaltungskarte (26) ermöglicht, die Gesamtheit eines nicht verwendeten Volumens (25), das im Bereich des Spalts (21-24) erscheint, zu füllen.

2. Zahlungsvorrichtung (20) nach Anspruch 1, **dadurch gekennzeichnet, dass** die elektronische Schaltungskarte (26) ferner mindestens eine integrierte Steuer- und/oder Kommunikationsschaltung umfasst.

3. Zahlungsvorrichtung (20) nach Anspruch 2, **dadurch gekennzeichnet, dass** die mindestens eine integrierte Kommunikationsschaltung Kommunikationsmittel umfasst, die der Gruppe angehören, umfassen:
- Kommunikationsmittel vom Typ Bluetooth;
- Kommunikationsmittel vom Typ WiFi;
- kontaktlose Kommunikationsmittel.

4. Zahlungsvorrichtung (20) nach Anspruch 2, **dadurch gekennzeichnet, dass** die mindestens eine integrierte Steuerschaltung mindestens einen Identifikator der elektronischen Schaltungskarte (26) trägt.

5. Zahlungsvorrichtung (20) nach Anspruch 4, **dadurch gekennzeichnet, dass** der mindestens eine Identifikator der elektronischen Schaltungskarte (26) eine MAC-Adresse eines Kommunikationsmittels einer integrierten Kommunikationsschaltung der elektronischen Schaltungskarte (26) ist.

6. Zahlungsvorrichtung (20) nach Anspruch 1, **dadurch gekennzeichnet, dass** die elektronische Schaltungskarte (26) ferner eine Einbruchschutzvorrichtung umfasst, umfassend mindestens eine dreidimensionale leitende Schaltung, die an einen Eingang eines Sicherheitsprozessors der Zahlungsvorrichtung angeschlossen ist.

7. Elektronisches Zahlungsendgerät (10), das durch das Zusammenschalten einer Zahlungsvorrichtung (20) und einer Kommunikationsvorrichtung, die ein Standard-Telefonendgerät ist, gebildet ist, wobei die Zahlungsvorrichtung (20) ein Gehäuse umfasst, das von einer oberen Halbschale (21-3) und einer unteren Halbschale (21-4) gebildet ist, umfassend eine Fläche zur Befestigung (22) einer modularen Schnittstelle (60) zum Zuschalten der Kommunikationsvorrichtung (30) und einen Spalt (21-42), der sich längs erstreckt, wobei der Spalt eine Öffnung (23-1) aufweist, die den Durchgang eines Magnetlesekopfes (24) ermöglicht,
wobei die Zahlungsvorrichtung (20) ferner **dadurch gekennzeichnet ist, dass** sie unter der Befestigungsfläche (22) eine elektronische Schaltungskarte (26) umfasst, die seitlich zum Magnetlesekopf (24) und in derselben Ebene wie die Lesefläche des Magnetkopfes angeordnet ist, so dass es die elektronische Schaltungskarte (26) ermöglicht, die Gesamtheit eines nicht verwendeten Volumens (25), das im Bereich des Spalts (21-24) erscheint, zu füllen.

## Claims

1. Payment device (20) intended to be paired with a communications device (30) to form an electronic payment terminal (10),
said payment device comprising a case formed by an upper half-shell (21-3) and a lower half-shell (21-4) comprising a surface for attaching (22) a modular interface (60) for the pairing of the communications device (30) and a slot (21-42) extending longitudinally, said slot having an aperture (23-1) enabling the passage of a magnetic reading head (24),
said payment device (20) being further **characterized in that** it comprises, beneath the attachment surface (22), an electronic circuit board (26) positioned laterally to said magnetic reading head (24) and substantially in the same plane as the reading surface of said magnetic head, so that said electronic circuit board (26) makes it possible to fill appreciably the totality of an unused volume (25) appearing at the slot (21-42).

2. Payment device (20) according to claim 1, **characterized in that** said electronic circuit board (26) further comprises at least one control and/or communications integrated circuit.

3. Payment device (20) according to claim 2, **characterized in that** said at least one communications integrated circuit comprises means of communication belonging to the group comprising:
- bluetooth type means of communication;
- WiFi type means of communication;
- contactless means of communication.

4. Payment device (20) according to claim 2, **characterized in that** said at least one control integrated circuit comprises at least one identifier of said electronic circuit board (26).

5. Payment device (20) according to claim 4, **characterized in that** said at least one identifier of said electronic circuit board (26) is a MAC address of a communications means of a communications integrated circuit of said electronic circuit board (26).

6. Payment device (20) according to claim 1, **characterized in that** said electronic circuit board (26) further comprises an anti-intrusion device comprising at least one 3D conductive circuit connected to an input of a security processor of said payment device.

7. Electronic payment terminal (10) formed by the pairing of a payment device (20) and a communications device (30) being a conventional phone terminal,
said payment device (20) comprising a case formed by an upper half-shell (21-3) and a lower half-shell (21-4) comprising a surface (22) for attaching a modular interface (60) for pairing the communications device (30) and a slot (21-42) extending longitudinally, said slot having an aperture (23-1) enabling the passage of a magnetic reading head (24),
said payment device (20) further comprising, beneath the attachment surface (22), an electronic circuit board (26) positioned laterally to said magnetic reading head (24) and substantially in the same plane as the reading surface of said magnetic head, so that said electronic circuit board (26) makes it possible to fill an unused volume (25) appearing at the slot (21-42).
